# EUROPÄISCHE PATENTSCHRIFT

(11) **EP 4 119 922 B1**
(45) Veröffentlichungstag und Bekanntmachung des Hinweises auf die Patenterteilung: **26.08.2026**
(21) Anmeldenummer: 22184224.8
(22) Anmeldetag: 11.07.2022
(51) Int. Cl.: G01N 11/14

(54) **VORRICHTUNG UND VERFAHREN ZUM UNTERSUCHEN EINER MATERIALPROBE MIT ERMITTLUNG EINES PROBENVOLUMENMESSWERTS**
DEVICE AND METHOD FOR INVESTIGATING A MATERIAL SAMPLE INVOLVING THE DETERMINATION OF A SAMPLE VOLUME MEASUREMENT VALUE
DISPOSITIF ET PROCÉDÉ D'EXAMEN D'UN ÉCHANTILLON DE MATIÈRE AVEC DÉTERMINATION D'UNE VALEUR MESURÉE DE VOLUME D'ÉCHANTILLON

(30) Priorität: 15.07.2021 DE 102021118393
(43) Veröffentlichungstag der Anmeldung: 18.01.2023
(73) Patentinhaber: Fraunhofer-Gesellschaft zur Förderung der angewandten Forschung e.V., 80686 München (DE)
(72) Erfinder: Wirries, Jonas, 28359 Bremen (DE); Rütters, Martin, 28359 Bremen (DE)
(74) Vertreter: Pfenning, Meinig & Partner mbB

(56) Entgegenhaltungen:
- WO-A1-2017/219056
- CARDINAELS RUTH ET AL: "Quantifying the errors due to overfilling for Newtonian fluids in rotational rheometry", RHEOLOGICA ACTA, DIETRICH STEINKOPFF VERLAG, DARMSTADT, DE, vol. 58, no. 8, 6 July 2019 (2019-07-06), pages 525 - 538, XP036858386, ISSN: 0035-4511, [retrieved on 20190706], DOI: 10.1007/S00397-019-01153-Z
- PIERRE LEH\'ERICEY ET AL: "Time-resolved rheometry of drying liquids and suspensions", ARXIV.ORG, CORNELL UNIVERSITY LIBRARY, 201 OLIN LIBRARY CORNELL UNIVERSITY ITHACA, NY 14853, 12 January 2021 (2021-01-12), XP081981015, DOI: 10.1122/8.0000214
- HAIDER ET AL: "Cure shrinkage characterization and modeling of a polyester resin containing low profile additives", COMPOSITES PART A, ELSEVIER, AMSTERDAM, NL, vol. 38, no. 3, 15 December 2006 (2006-12-15), pages 994 - 1009, XP005805637, ISSN: 1359-835X, DOI: 10.1016/J.COMPOSITESA.2006.06.020

## Beschreibung

Die Erfindung betrifft ein Verfahren und eine Vorrichtung zur Untersuchung (insbesondere Vermessung) einer bevorzugt volumenveränderlichen und insbesondere aushärtenden Materialprobe. Ebenso sind das Verfahren und die Vorrichtung bei volumenkonstanten Materialproben einsetzbar.

Es ist bekannt, dass bestimmte Materialien einer Volumenänderung z.B. in Form einer Schrumpfung unterliegen. Diese Schrumpfung kann z.B. infolge eines Aushärtens oder Erstarrens oder allgemein eines Phasenübergangs auftreten. Auch temperaturbedingte Ausdehnungen, ein Abdampfen, eine Quellung oder eine chemische Reaktion können Ursachen einer Volumenänderung sein. Beispiele derartiger Materialien, auf die sich auch die vorliegende Offenbarung richtet, ohne aber darauf eingeschränkt zu sein, sind Klebstoffe, Beton- oder Mörtelerzeugnisse, reaktive Polymere, polymere Vergussmassen, quellende Polymere und geschmolzene Metalle.

Im Fall von Klebstoffen ist der sogenannte Härtungsschrumpf von besonderem Interesse. Hiervon hängen die in eine Klebverbindung und die hierüber verbundenen Fügepartner eingebrachten Spannungen ab, die zu Deformationen und einem Versagen der Klebschicht führen können. Ist dieser Härtungsschrumpf bzw. sind die daraus resultierenden Spannungen unzureichend bekannt, müssen Sicherheitsfaktoren zur Auslegung der Klebverbindungen angepasst und muss diese entsprechend überdimensioniert werden.

Zusätzlich sind insbesondere für Klebstoffe verschiedene rheologische Materialkennwerte zu bestimmen, beispielsweise der sich beim Aushärten ändernde komplexe Schubmodul für viskoelastische Materialien mittels Rheometern oder dynamisch-mechanischer Analyse.

Bisher ist der Messaufwand zum präzisen Bestimmen eines Volumens und insbesondere einer Volumenänderung als auch der rheologischen Kennwerte hoch, da hierfür in der Regel getrennte Messungen und Messaufbauten erforderlich sind.

Die DE 10 2010 018065 B4 offenbart ein Rheometer, bei dem eine Materialprobe zwischen zwei einander zugewandten Plattenflächen und genauer gesagt in einem durch die Plattenflächen begrenzten Spalt aufgenommen ist. Diese Lehre thematisiert unerwünschte Veränderungen einer eingestellten Spalthöhe sowie Möglichkeiten, die Spalthöhe hin zu einem gewünschten Wert zu korrigieren.

Der folgende Artikel betrifft die Ermittlung eines Messfehlereinflusses bei einer rheometrischen Viskositätsermittlung: CARDINAELS RUTH ET AL:"Quantifying the errors due to overfilling for Newtonian fluids in rotational rheometry", RHEOLOGICA ACTA, DIETRICH STEINKOPFF VERLAG, DARMSTADT, DE Bd. 58, Nr. 8, 6. Juli 2019 (2019-07-06), Seiten 525-538, XP036858386, ISSN: 0035-4511, DOI: 10.1007/S00397-019-01153-Z.

Auch bei auf dem Markt erhältlichen Rheometern ist es bekannt, eine Spalthöhe über den typischerweise vertikalen oder, anders bezeichnet, axialen Abstand der den Spalt begrenzenden Flächen einzustellen und zu überwachen. Letzteres kann kraftgesteuert erfolgen, indem auf wenigstens eine der Flächen einwirkende Normalkräfte zumindest mittelbar messtechnisch erfasst werden. Typischerweise wird ein Gleichgewichtszustand angestrebt, bei dem die einwirkenden Normalkräfte unterhalb eines definierten Schwellenwerts liegen und bevorzugt null betragen. Verringert sich ein Materialprobenvolumen infolge eines Erstarrens, nimmt der Wert einer z.B. an einer oberen Fläche anliegenden Kraft ab und nimmt ggf. sogar negative Werte an. Mittels eines Aktors kann die obere Fläche (z.B. umfasst von einer oberen Rheometerplatte) im Abstand nachgeführt werden, um eine Normalkraft nahe Null zu erhalten.

Grundsätzlich kann die Fläche aber auch im Abstand festgehalten werden und bei Verringerung des Materialprobenvolumens die Normalkraft als Messgröße erfasst werden, gleichbedeutend mit einer unendlich steifen Umgebung.

Wie einleitend aufgezeigt, ist es für volumenveränderliche Materialproben von Interesse, neben den rheologischen Kennwerten auch Messinformationen betreffend eine Volumenänderung zu erhalten. Ebenso kann es relevant sein, das Probenvolumen allgemein präzise zu bestimmen und/oder zu überwachen, ohne dass zwingend eine Volumenänderung vorliegt. Ebenso ist es von Interesse, resultierende Eigenspannungen bei Einsatz des Probenmaterials z.B. zum Ausbilden einer Fügeverbindung zu untersuchen.

Es hat sich jedoch gezeigt, dass das Volumen und insbesondere eine etwaige Volumenabnahme einer Materialprobe mit existierenden Rheometern oftmals nur wenig genau erfassbar sind. Zusätzlich können bisher keine aussagekräftigen Rückschlüsse auf resultierende Eigenspannungen getroffen werden. Dies bedeutet, dass zum Erhalten genauer Messwerte das Schrumpfverhalten einer Materialprobe getrennt von der rheologischen Messung bestimmt werden muss und auch etwaige Eigenspannungen auf anderem Wege zu bestimmen sind. Dies erhöht den Zeitaufwand, erfordert zusätzliche Messtechnik und kann aufgrund mangelnder Vergleichbarkeit von der rheologisch untersuchten Materialprobe und der z.B. mittels Quecksilberdilatometrie oder einer Schrumpfsmesszelle hinsichtlich des Schrumpfverhaltens untersuchten Materialprobe fehlerbehaftet sein.

Auch unabhängig vom Volumen ist das Überwachen der Materialprobe bei existierenden rheologischen Messaufbauten meist nicht zufriedenstellend möglich.

Es stellt sich somit die Aufgabe, die Volumenermittlung und/oder Überwachung einer Materialprobe insbesondere im Zusammenhang mit rheologischen Untersuchungen zu verbessern.

Diese Aufgabe wird durch die Gegenstände der beigefügten unabhängigen Ansprüche gelöst. Vorteilhafte Weiterbildungen sind in den abhängigen Ansprüchen angegeben.

Insbesondere vorgeschlagen wird ein Verfahren zur Untersuchung einer bevorzugt volumenveränderlichen Materialprobe (bzw. eines volumenveränderlichen Materialvolumens). Die Volumenänderung kann materialbedingt während der Untersuchung auftreten, insbesondere bei Raumtemperaturen und/oder unter Vorgabe definierter Untersuchungsbedingungen. Beispielsweise kann die Volumenänderung infolge eines Aushärtens der Materialprobe auftreten, während diese sich zwischen den Platten befindet.

Das Verfahren weist auf:
- Anordnen der Materialprobe in einem Spalt zwischen zwei Flächen, die bevorzugt von einem Rheometer umfasst sind, wobei die Flächen relativ zueinander entlang einer Bewegungsachse (axial) bewegbar sind, und gemäß wenigstens einem weiteren räumlichen Freiheitsgrad relativ zueinander beweglich sind, um wenigstens einen (bevorzugt rheologischen) Materialkennwert zu ermitteln;
- berührungsloses Erfassen von zumindest einem Teilbereich von einer den Spalt überbrückenden Probenoberfläche (z.B. eine Probenmantelfläche) mit einer berührungslosen Messeinrichtung;
- Ermitteln eines (z.B. absoluten oder relativen und insbesondere einen prozentualen Schrumpf angebenden) Probenvolumenmesswerts auf Basis von durch das berührungslose Erfassen gewonnenen Messinformationen. Zusätzlich oder alternativ kann wenigstens eine Forminformation betreffend die den Spalt überbrückende Probenoberfläche auf Basis von durch das berührungslose Erfassen gewonnenen Messinformationen ermittelt werden.

Die offenbarte Lösung ist nicht auf volumenveränderliche Materialproben beschränkt, sondern kann auch bei im Wesentlichen volumenstabilen Materialproben eingesetzt werden. Dann kann der berührungslos erfasste Probenvolumenmesswert zum Beispiel zur Überwachung einer Vergleichbarkeit von für eine rheologische Untersuchung verwendeten Materialproben, zur allgemeinen Spalthöhenerfassung oder zur nachstehend erläuterten Gültigkeitsüberwachung verwendet werden. Vorteilhaft ist dies zum Beispiel bei rheologisch zu untersuchenden Lacken, Cremes oder Silikonen. Das Volumen volumenveränderlicher Materialproben kann zumindest anfänglich bei der Versuchsdurchführung erfasst werden oder aber mehrfach und insbesondere kontinuierlich während der Versuchsdurchführung.

Insbesondere kann ein sogenanntes Trimmen des Spalts, bei dem der Probenmaterialüberstand rund um die Flächen oder Platten z.B. mit einem Spatel manuell entfernt und genauer gesagt abgestreift wird, überwacht werden. Zum Beispiel kann überprüft werden, ob es infolge des Trimmens zu einem erhöhten Materialaustrag aus dem Spalt kommt, d.h. ob die Materialprobe also beispielsweise noch ein gültiges Mindestvolumen aufweist.

Insbesondere der Fehlerfall einer sogenannten "Edge Fracture" (d.h. einer Instabilität der Probengeometrie) bei der Messung komplexer Fluide kann mit der hier vorgestellten Lösung zuverlässig überwacht werden, wodurch die Qualität von standardmäßigen rheologischen Untersuchungen verbessert werden kann. Dieser "Edge Fracture" kann z.B. durch starke und/oder schwellenwertüberschreitende Änderung des Probenprofils infolge fortschreitender Rissbildung innerhalb der Probe im Vergleich zur Ausgangsgeometrie erkannt werden.

Die Forminformation kann die Form des sensorisch erfassten Abschnitts oder Bereichs der Probenoberfläche beschreiben und/oder abhängig von dieser Form sein. Die Forminformation kann ein Oberflächenprofil der Probenoberfläche zum Beispiel in einer die Bewegungsachse enthaltenden Querschnittsansicht beschreiben, dieses abbilden oder diesem entsprechen. Die Forminformation kann eine Sammlung und insbesondere einen Verlauf von Abstandsmesswerten (z.B. entlang der Bewegungsachse) der erfassten Probenoberfläche umfassen, woraus auf die Form der Probenoberfläche geschlossen werden kann. Insbesondere kann die Forminformation ein Ausmaß einer nachstehend noch erläuterten bspw. Konkave oder konvexen Wölbung der Probenoberfläche beschreiben oder quantifizieren.

Allgemein kann anhand der Forminformation und insbesondere einer etwaigen Änderung oder Änderungsgeschwindigkeit hiervon auf einen zulässigen oder unzulässigen Zustand der Materialprobe geschlossen werden. Eine solche Überwachung und/oder Auswertung des Zustands der Materialprobe anhand der Forminformation kann eine gesonderte Verfahrensmaßnahme sein. Zum Beispiel können darauf basierend vorbestimmte Fehlerfälle detektiert werden, wie zum Beispiel hierin erwähnte "Edge Fractures".

Die Flächen zur Aufnahmen der Materialprobe können einander zugewandt sein. Die Flächen können, müssen aber nicht, zumindest abschnittsweise eben sein. Sie können Oberflächen voneinander gegenüberliegenden Platten sein oder von einem Kegel und einer Platte, die einander gegenüberliegen. Hierdurch kann ein Platten-Platten-Paar oder ein Platten-Kegel-Paar nach bekannter Rheometerbauart bereitgestellt werden. Ein die Flächen aufweisendes Rheometer kann ein Rotationsrheometer und/oder ein Scherrheometer sein.

Bei dem weiteren Freiheitsgrad kann es sich zum Beispiel um einen Dreh-Freiheitsgrad handeln, der bevorzugt um die Bewegungsachse verläuft. Dies ist insbesondere bei einem Rotationsrheometer der Fall. Alternativ kann es sich um einen quer zu der Bewegungsachse verlaufenden translatorischen Freiheitsgrad handeln. Dann kann es sich um ein Scherrheometer handeln. Durch Vorgeben bestimmter Bewegungsgrößen (beispielsweise Drehmomente oder Geschwindigkeitsprofile) können gemäß standardisierter Messverfahren definierte rheologische Materialkennwerte bestimmt werden.

Beispielsweise kann es sich bei dem Materialkennwert um einen Viskositätskennwert, Elastizitätskennwert oder einen Schubmodul-Kennwert handeln (beispielsweise ein komplexer Schubmodul). Der Materialkennwert ist im Rahmen des Verfahrens ebenfalls ermittelbar, sodass im Rahmen nur eines Messvorgangs sowohl die Volumenänderung (insbesondere eine Schrumpfung), ein resultierender Normalkraftwert als auch der o.g. Materialkennwert bestimmbar ist.

Die Platten können aktorisch aufeinander zu und voneinander wegbewegbar sein, um eine Spalthöhe einzustellen. Die Spalthöhe kann mittels einer Spalthöhemesseinrichtung überwacht werden. Diese kann zum Beispiel mittelbar anhand von Betriebs- und/oder Weggrößen des Aktors auf einen Abstand der Platten und somit auf die Spalthöhe schließen. Auch eine direkte Messung dieses Abstandes mittels Abstandssensoren kann vorgesehen sein.

In an sich bekannter Weise kann auf Basis einer Annahme zur Erstreckung der Materialprobe quer zu der (Platten-) Bewegungsachse, beispielsweise zu einem Radius der Materialprobe, und anhand der Spalthöhe ein Wert des Probenvolumens berechnet werden. Der Radius der Materialprobe kann mit dem Radius der Platten gleichgesetzt werden, da die Materialprobe bei den typischerweise eingestellten niedrigen Spalthöhen aufgrund der Kapillarwirkung in etwa deren Radius annimmt.

Gemäß der hier offenbarten Lösung wird jedoch, zusätzlich oder alternativ, der Wert des Probenvolumens anhand einer messtechnisch erfassten Abmessung der Materialprobe bestimmt, die bevorzugt quer zur (Platten-) Bewegungsachse verläuft, d.h. wird bevorzugt der Radius messtechnisch zumindest mittelbar erfasst. Insbesondere wurde erkannt, dass mit den bisherigen Systemen Spalthöhenänderungen, die auf eine Abnahme des Probenvolumens und insbesondere ein Aushärten hiervon zurückführen sind, nicht zuverlässig und vor allem lediglich verzögert erfassbar sind.

Insbesondere während einer anfänglichen Volumenabnahme und/oder Erstarrung kann bisher keine Volumenänderung zuverlässig gemessen werden. Im Fall von Klebstoffen sind beispielsweise die infolge einer Erstarrung anfänglich auftretenden Adhäsionskräfte an den Platten zu gering, als dass sie mit bisherigen Systemen und insbesondere im Rahmen bisheriger Kraftregelungen erfassbar wären. Insbesondere wurde erkannt, dass die Volumenabnahme anfänglich primär radial erfolgt, was bisher messtechnisch nicht erfasst wird, und erst anschließend primär axial erfolgt. Wie hierin noch erläutert, setzt die Erfindung diese Erkenntnis auch vorteilhaft für das Vorhersagen etwaiger Eigenspannungen ein.

Die Messeinrichtung kann einen optischen Sensor umfassen, beispielsweise einen Lasersensor. Insbesondere kann es sich um einen optischen Abstandssensor handeln. Gemäß einer bevorzugten Variante ist die Messeinrichtung dazu eingerichtet, eine Mehrzahl von Messwerten (insbesondere Abstandsmesswerten) ortsaufgelöst zu erfassen. Beispielsweise können diese Messwerte und insbesondere deren dazugehörigen Orte spaltüberbrückend und/oder entlang der Bewegungsachse verteilt sein.

Gemäß einer Variante handelt es sich bei dem Sensor um einen Laserliniensensor, wobei entlang der Linie ortsaufgelöste (Abstands-) Messwerte bestimmbar sind und die Linie in einem Winkel zu den Flächen und bevorzugt entlang oder auch parallel zu der Bewegungsachse verläuft. Die Linie kann den von der Messeinrichtung erfassten Teilbereich der Probenoberfläche definieren und/oder abdecken und bevorzugt den Spalt überbrücken.

Anders ausgedrückt kann eine Abfolge oder ein Profil von Messwerten und insbesondere Abstandswerten entlang der Spalthöhe gemessen werden. Dies ermöglicht ein besonders aussagekräftiges Bestimmen von Abmessungen der Materialprobe im Spalt sowie in radialer Richtung.

Jegliche hierin erwähnten Abstandswerte können sich auf einen Abstand zur Messeinrichtung beziehen. Es versteht sich jedoch, dass bei bekanntem Ort der Messeinrichtung, beispielsweise relativ zu Bewegungsachse, auch anderweitige Abstandswerte per Umrechnung bestimmbar sind, beispielsweise Abstandswerte eines erfassten Ortes der Probenoberfläche von der Bewegungsachse.

Allgemein kann die Bewegungsachse orthogonal zu wenigstens einer der Flächen verlaufen und/oder beispielsweise parallel zur Wirkungsrichtung der Gravitationskraft (d. h. es kann sich um eine vertikale Achse handeln). Insbesondere wenn die Flächen von Platten, Kegeln oder anderweitigen definierten Prüfkörpern umfasst sind, verläuft die Bewegungsachse bevorzugt mittig durch die Flächen.

Das Probenvolumen kann aufgrund der wirkenden Kapillarkräfte eine im Wesentlichen (kreis-) zylindrische Form annehmen. Bei der den Spalt überbrückenden Probenoberfläche kann es sich um eine Mantelfläche und insbesondere eine Zylindermantelfläche des Probenvolumens handeln. Die Spalthöhe kann weniger als 5 mm und beispielsweise zwischen 100 µm und 2 mm oder auch zwischen 200 µm und 1 mm betragen.

Zum Ermitteln des Probenvolumenmesswerts wird die Spalthöhe optional mittels jeglichem bekannten System und/oder anhand der berührungslos erfassten Messinformationen bestimmt. In letzterem Fall kann beispielsweise aus einem vorstehend erläuterten ortsaufgelösten Messwerte-Profil und gegebenenfalls unter Hinzuziehen von Vergleichs- oder auch Kalibrierinformationen der Übergang zwischen den Flächen und dem Probenvolumen identifiziert werden (beispielsweise anhand einer schwellenwertüberschreitenden lokalen Änderung gemessener Abstandswerte). Der Abstand dieser ermittelten Übergänge entlang der Bewegungsachse kann der Spalthöhe entsprechen.

Zusätzlich oder alternativ kann zum Ermitteln des Probenvolumenmesswerts auf Basis der Messinformationen eine Abweichung der Materialprobe von einer nachstehend erläuterten Referenz-Probengrenze oder auch Referenz-Mantelfläche ermittelt werden. Je nachdem, ob eine Zunahme oder Abnahme gegenüber einer solchen Referenz vorliegt, kann die festgestellte Abweichung zu einem zum Beispiel auf Basis der Referenz-Probengrenze zunächst ermittelten (temporären) Probenvolumenmesswert aufaddiert oder von diesem abgezogen werden, um zu einem finalen oder auch gültigen Probenvolumenmesswert zu gelangen.

Derartige Abweichungen von den genannten Referenzen können sich ergeben, wenn die Materialprobe zunächst über die seitlichen Spalt- und/oder Flächengrenzen hinaus hervorsteht, beispielsweise konvex übersteht oder hervorquillt und/oder eine entsprechend konvex gewölbte umlaufende Mantelfläche aufweist. Die konvexe Wölbung kann in einer die Bewegungsachse enthaltenen Schnittansicht vorliegen.

Zusätzlich oder alternativ können sich derartige Abweichungen aufgrund einer nach innen oder auch hin zur Bewegungsachse eingerückte oder auch konkav einfallende Mantelfläche (wiederum betrachtet in der vorstehenden Schnittansicht) ergeben. Dies kann infolge einer Erstarrung der Materialprobe auftreten. Die konkaven oder konvexen Wölbungen können auch als das Ausbilden eines Meniskus bezeichnet werden.

Bevorzugt erfolgt mit der hierin offenbarten Lösung (also mit dem Verfahren und/oder der Vorrichtung) eine fortlaufende Messung, bei der aufeinanderfolgend eine Mehrzahl von Probenvolumenmesswerten und/oder Werten des Materialkennwerts ermittelt werden. Insbesondere kann parallel zu einer Volumenänderung und insbesondere einem Schrumpfen der Materialprobe wiederholt und/oder kontinuierlich eine rheologische Messung des Materialkennwerts erfolgen. Auf diese Weise können Zeitverläufe der Größen bestimmt und gegebenenfalls auch einander zugeordnet werden.

Beispielsweise sieht eine Ausführungsform vor, dass sich die aufeinanderfolgend erfassten Probenvolumenmesswerte und Werte des Materialkennwerts auf dieselben Zeitpunkte beziehen. Allgemein können anhand der Probenvolumenmesswerte Übergänge zwischen einem flüssigen und erstarrten Zustand der Materialprobe oder auch vergleichbare definierte Zustände während des Erstarrungsvorgangs ermittelt werden. Durch einen Bezug der ermittelten Größen auf denselben Zeitpunkt können diesen definierten (Erstarrungs-) Zuständen entsprechende Werte des Materialkennwerts zugeordnet werden.

Eine weitere Ausführungsform sieht ein Aufbringen einer (definierten) Normalkraft auf die Materialprobe vor, beispielsweise mit demselben Aktor, mit dem die Flächen relativ zueinander beweglich sind. Insbesondere kann dies zum Vorgeben oder, anders ausgedrückt, Simulieren einer definierten Steifigkeitsumgebung erfolgen. Dies ist insbesondere bei aushärtenden Materialproben und/oder bei zum Herstellen von Fügeverbindungen verwendeten Materialien von Interesse. Beispielsweise hängt die sich beim Härten/Schrumpfen ausbildende Kraft/Eigenspannung von Klebstoffen oftmals von deren Steifigkeitsumgebung ab, welche ein sogenanntes Relaxationsverhalten des Klebstoffes beeinflusst und sich dadurch auf die Eigenspannung in dem Fügeverband auswirkt. Folglich kann bei dieser Ausführungsform ein sogenanntes eigenspannungsrelevantes Volumen und/oder eine eigenspannungsrelevante Volumenänderung präzise ermittelt werden.

Es wurde erkannt, dass derartige Zusammenhänge mit bisherigen Messaufbauten und insbesondere gemeinsam mit rheologischen Messungen nicht zufriedenstellend erfassbar sind. Genauer gesagt wurde erfindungsgemäß erkannt, dass selbst aus einem mit bisherigen Ansätzen ermittelten Volumenschrumpf etwaige resultierende Eigenspannungen nicht direkt zugänglich sind. So liegt zum Beispiel ein Klebstoff zu Beginn einer Aushärtung flüssig vor, während, wie erwähnt, in späteren Phasen unter Umständen noch ein erheblicher Eigenspannungsanteil durch Spannungsrelaxationen abgebaut werden kann. Dies hat zur Folge, dass nur ein Anteil des Volumenschrumpfs zur Eigenspannungsbildung beiträgt.

Vorliegend kann daher vorgesehen sein, einen Zusammenhang zwischen angelegter Normalkraft und Volumenänderung zu ermitteln. Hierfür können z.B. mehrere Messungen für identische Materialproben unter verschiedenen Normalkrafteinstellungen durchgeführt werden. In diesem Kontext ist die hier offenbarte Lösung und insbesondere deren Messeinrichtung dahingehend vorteilhaft, als dass die Volumenänderung aus den hierin geschilderten Gründen präzise ermittelbar ist und somit die Auswirkungen angelegter Normalkräfte auf die Volumenänderungen präzise bestimmbar sind.

Insbesondere können unter Anlegen definierter Normalkräfte gewonnene experimentelle Daten als Eingangswerte für eine Kleb- und Bauteilauslegung und/oder eine Spannungsvorhersage jeweils in einer Finite Element Analyse (FEA) genutzt werden.

Die Normalkraft kann entgegen einer Volumenkontraktion der Materialprobe wirken, z.B. um einen Deformationswiderstand von mit dem Material zu verbindenden Fügepartnern zu simulieren. Die Normalkraft wirkt vorzugsweise axial. Sie kann zeit- und/oder flächenabstandsabhängig definiert sein. Letzteres kann dem Definieren oder Vorgeben eines (Normal-) Kraft-Weg-Verlaufs entsprechen und/oder eines Deformationsverhaltens (insbesondere einer Federkonstante) simulierter Fügepartner entsprechen gleichbedeutend mit einer vorgegebenen Steifigkeit des Verbunds. Der Flächen- und/oder Plattenabstand kann mittels jeglicher hierin geschilderter erfindungsgemäßer oder vorbekannter Variante zur Spalthöhenmessungen ermittelt werden.

Erfindungsgemäß umfassen die Messinformationen wenigstens einen Abstandsmesswert und/oder einen von einer vordefinierten Referenz-Probengrenze (zum Beispiel in Form einer Referenz-Mantelfläche) abweichenden Flächenanteil der Materialprobe. Die Referenz- Probengrenze kann einer idealen Probengrenze entsprechen, die bevorzugt ohne Volumenänderung vorliegt. Es kann sich um eine konzentrisch zur Bewegungsachse verlaufende ebene Zylindermantelfläche handeln, die in einem konstanten Abstand zur Bewegungsachse verläuft (also relativ hierzu nicht konvex oder konkav gekrümmt ist).

Wie ebenfalls vorstehend angedeutet, kann gemäß einer Ausführungsform die Spalthöhe erfasst und der Probenvolumenmesswert auch unter Berücksichtigung der Spalthöhe ermittelt werden.

Gemäß einem weiteren Aspekt zeichnet sich das Verfahren durch Bereitstellen einer Kalibrierinformation aus, die eine Grenze (zum Beispiel in Form einer Außenkante oder Außenmantelfläche) wenigstens einer der Flächen in einer Richtung quer zur Bewegungsachse beschreibt. Die Messinformationen und/oder der Probenvolumenmesswert können unter Berücksichtigung der Kalibierinformationen bestimmt werden. Beispielsweise kann hierdurch der erwähnte Übergang zwischen den Flächen und der Materialprobe und darauf basierend die Spalthöhe bestimmt werden. Alternativ oder zusätzlich können anhand dieses Übergangs diejenigen Messwerte (und/oder dazugehörigen Orte) aus einer Mehrzahl ortsaufgelöster Messwerte bestimmt werden, die der Materialprobe zuzuordnen sind. Es können also die materialprobenbezogenen Messwerte herausgefiltert werden, um das Probenvolumen präzise zu ermitteln (insbesondere unabhängig von den umgebenden Flächen zuzuordnenden Messwerten).

Im Rahmen des Verfahrens kann der Materialkennwert ermittelt werden. Das Verfahren kann hierzu jegliche weiteren Maßnahmen umfassen, bespielweise das Erzeugen einer Relativbewegung um den weiteren Freiheitsgrad.

Bei einer weiteren Ausführungsform wird der Materialkennwert erfasst und dessen Gültigkeit auf Basis des Probenvolumenmesswerts bestimmt. Bespielweise kann als Gültigkeitskriterium definiert sein, dass eine Änderung des Probenvolumenmesswerts bevorzugt innerhalb einer definierten Zeitspanne einen zulässigen Schwellenwert nicht überschreitet und/oder dass der Probenvolumenmesswert unterhalb eines definierten Schwellenwertes bleibt. Ist dies nicht der Fall, könnte die Materialprobe aus dem Spalt herausfließen oder zumindest anteilig schon herausgeflossen sein, was einer unzulässigen Messbedingung entspricht. Letzteres kann zum Beispiel dann auftreten, wenn, wie im Kontext der offenbarten Lösung allgemein möglich, als vorgegebene Messbedingung durch die Flächen eine definierte und von Null verschiedene Normalkraft auf die Materialprobe ausgeübt wird.

Eine Weiterbildung sieht ein Verwenden der Messinformationen im Rahmen einer Steuerung oder Regelung der Spalthöhe vor. Wie geschildert, kann anhand der Messinformationen optional auch die Spalthöhe bestimmt werden. Weicht diese von einem Sollwert ab, kann der Flächenabstand mittels einer Aktuatorik geeignet angepasst werden.

Gemäß einem weiteren Aspekt kann die Messeinrichtung relativbeweglich zu dem Spalt sein. Insbesondere kann sie diesen zumindest abschnittsweise abfahren, beispielsweise durch Rotieren der Messeinrichtung relativ zu und/oder um die Flächen bzw. den Spalt. Eine Rotationsachse kann parallel zu der bevorzugt vertikalen Achse verlaufen, entlang derer die Flächen relativ zueinander verlagerbar sind. Während der Relativbewegung kann die Messeinrichtung den Spalt an unterschiedlichen Position und bevorzugt fortlaufend erfassen. Hierdurch wird der Messbereich der Messeinrichtung erweitert.

Offenbart wird auch eine Vorrichtung, insbesondere ein Rheometer jeglicher hierin geschilderten Art, zur Untersuchung einer bevorzugt volumenveränderlichen Materialprobe, wobei die Vorrichtung umfasst:
- zwei Flächen, die einen Spalt zur Aufnahme der Materialprobe begrenzen, die relativ zueinander entlang einer Bewegungsachse bewegbar sind, und die gemäß wenigstens einem weiteren räumlichen Freiheitsgrad relativ zueinander beweglich sind, um einen Materialkennwert zu ermitteln;
- eine Messeinrichtung, die dazu eingerichtet ist, zumindest einen Teilbereich von einer den Spalt überbrückenden Probenoberfläche berührungslos zu erfassen;
- wobei die Vorrichtung dazu eingerichtet ist, einen Probenvolumenmesswert auf Basis von durch die berührungslose Erfassung gewonnenen Messinformationen zu ermitteln.

Alternativ oder zusätzlich kann auch bei der Vorrichtung wenigstens eine Forminformation betreffend die den Spalt überbrückenden Probenoberfläche gemäß jeglicher hierin offenbarten Variante ermittelbar sein und/oder gemäß jeglicher hierin geschilderten Variante überwacht und/oder ausgewertet werden.

Die Vorrichtung kann zur Ausführung eines Verfahrens gemäß jeglicher hierin geschilderter Variante eingerichtet sein. Hierfür kann sie jegliche hierin geschilderten Betriebszustände einnehmen und/oder Schritte ausführen. Sämtliche in Bezug auf das Verfahren erläuterten Varianten und Weiterbildungen gelten für die Vorrichtung und insbesondere deren gleichlautende Merkmale ebenfalls.

Anhand der beigefügten schematischen Figuren werden im Folgenden Ausführungsformen des Verfahrens und der Vorrichtung beschrieben.
- Fig. 1: zeigt eine Prinzipskizze einer Vorrichtung gemäß einer ersten Ausführungsform, die ein Verfahren gemäß einer ersten Ausführungsform ausführt, wobei sich die Vorrichtung in einem Ausgangzustand bei noch flüssiger Materialprobe befindet;
- Fig. 2: zeigt die Vorrichtung in einem nachgelagerten Zustand bei zumindest teilweise erhärteter Materialprobe;
- Fig. 3: zeigt ein Ablaufschema des Verfahrens gemäß der ersten Ausführungsform;
- Fig. 4: zeigt mit dem Verfahren aus Fig. 3 ermittelbare Messkurven.

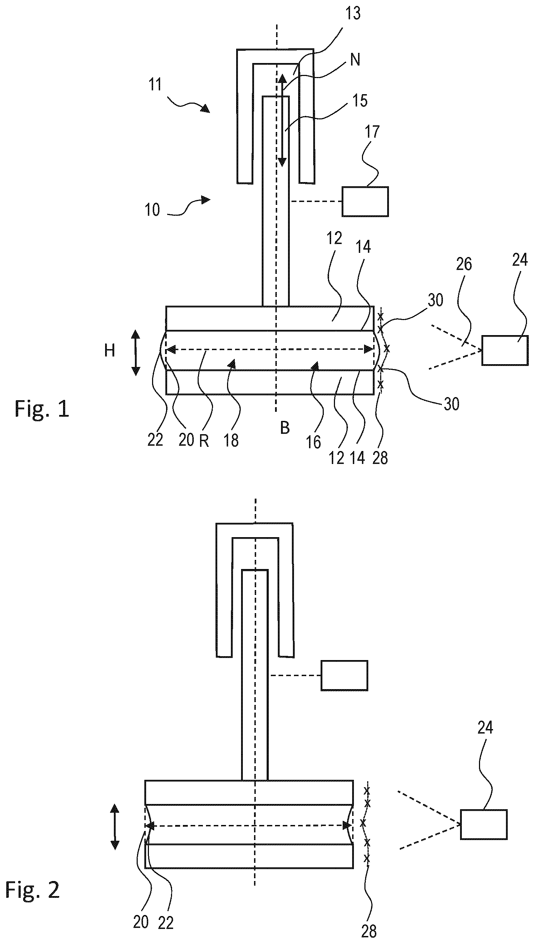

Figur 1 zeigt eine Vorrichtung 10 in Form eines Rheometers. Die Vorrichtung 10 umfasst ein Platten-Platten-Paar gemäß einer herkömmlichen Rheometer-Bauart, das gebildet wird durch zwei einander gegenüberliegende Platten 12. Die einander zugewandten Innenseiten der Platten 12 stellen ebene Flächen 14 bereit, die ein Spalt 16 zur Aufnahme einer Materialprobe 18 (kurz: Probe 18) begrenzen. Die Materialprobe 18 ist im gezeigten Beispiel ein zunächst flüssiger Klebstoff, der zunehmend aushärtet und dabei einem Härtungsschrumpf unterliegt.

Eine Spalthöhe H ist mit einem Doppelpfeil markiert. Die Platten 12 sind entlang einer räumlich vertikalen Bewegungsachse B relativ zueinander axial bewegbar, sodass die Spalthöhe H variabel ist. Hierfür umfasst die Vorrichtung 10 einen Aktor 11, der lediglich beispielhaft einen in einer Zylinderkammer 13 verlagerbar geführten Kolben 15 aufweist. Der Kolben 15 ist mit der oberen Platte 12 verbunden, um diese entlang der Bewegungsachse B anzuheben oder abzusenken. Die untere Platte 12 steht bevorzugt fest.

Die in Figur 1 dargestellten Größenverhältnisse sind nicht repräsentativ und schematisch stark vereinfacht. Die Spalthöhe H weist typischerweise Werte von wenigen Millimetern oder auch weniger als 1 mm auf, wohingegen der Durchmesser der Platten 12 mehrere Zentimeter, vorzugsweise aber wenigstens 4 mm betragen kann.

Die Ansicht von Figur 1 entspricht einer Seitenansicht der Vorrichtung 10. Die Platten 12 weisen einen kreisrunden Durchmesser auf und sind rotationssymmetrisch um die Bewegungsachse B ausgebildet. Die Vorrichtung 10 ist prinzipiell dazu eingerichtet, rheometrische Messungen gemäß standardisierten Verfahren auszuführen. Beispielsweise können rotationsrheometrische Messungen durch Relativverdrehen der Platten 12 um die Bewegungsachse B oder oszillierenden Messungen durch oszillierendes Relativbewegen der Platten 12 quer zur Bewegungsachse B durchgeführt werden. Der entsprechende Rotationsfreiheitsgrad und der Querbewegungs-Freiheitsgrad stellen gegenüber der axialen Verstellbarkeit der Platten 12 zusätzliche Bewegungsfreiheitsgrade der Vorrichtung 10 dar.

Die Materialprobe 18 ist in dem Spalt 16 derart angeordnet, dass sie an den Flächen 14 ganzflächig anliegt. Aufgrund der wirkenden Kapillarkräfte wird sie ferner in dem Spalt 16 gehalten, d. h. fließt sie zumindest bei geringen Spalthöhen H nicht aus dem Spalt 16 heraus.

Bisher wird typischerweise angenommen, dass sich eine freiliegende Referenz-Probengrenze bzw. -Mantelfläche 20 (gestrichelt dargestellt) derart einstellt, dass eine Radius R der Materialprobe 18 einem Radius der Platten 12 entspricht. Somit kann aus der Spalthöhe H, die zum Beispiel aus aktuellen Stellungen und/oder Betriebsgrößen des Aktors 11 ableitbar ist, und dem entsprechend angenommenen Radius R ein Probenvolumenmesswert errechnet werden.

Die Vorrichtung 10 umfasst auch einen Kraftsensor 17. Dieser kann gemäß jeglicher herkömmlichen Bauart ausgestaltet sein, beispielsweise als Kraftmessdose, Piezosensor oder Dehnungsmessstreifen. In an sich bekannter Weise können mit dem Kraftsensor 17 auf die obere Platte 12 einwirkende Normalkräfte gemessen werden.

Wurde eine gewünschte Spalthöhe H zum Durchführen einer rheologischen Messung eingestellt, ist es in der Regel gewünscht, zum Bereitstellen definierter und insbesondere wiederholbarer Messbedingungen diese Spalthöhe H konstant zu halten. Weiter wird allgemein ein vollflächiger Kontakt der Platten mit der Materialprobe bevorzugt.

Handelt es sich bei der im Spalt 16 aufgenommenen Materialprobe 18 um eine volumenveränderliche und im gezeigten Fall schrumpfende Materialprobe 18, sinkt die Spalthöhe H zum Beispiel infolge eines Erstarrens oder Aushärtens mit Zeit gegenüber der oberen Platte 12 ab. Dies resultiert in abnehmenden und gegebenenfalls sogar negativen Normalkräften an der oberen Platte 12, sodass, um deren Absinken zu verhindern, der Aktor 11 die Platte 12 entsprechend anheben muss. Dieser Vorgang wird im Stand der Technik als kraftgeregeltes Nachführen der Platten 12 bezeichnet.

Anders formuliert bewirkt bei einem Klebstoff die Haftung an den Platten 12 im Zusammenhang mit der reaktionsbedingten Volumenänderung eine Krafteinwirkung auf die Platten. Infolgedessen wird die meist obere Platte 12 (durch Einstellung eines definierten Kraftniveaus mittels des Aktors 11) nachgeführt, um somit den Kontakt der Probe 18 zu den Platten 12 während einer rheologischen Oszillations- oder Rotationsmessung sicherzustellen.

Umgekehrt kann bspw. eine Temperaturerhöhung zu einem Ausdehnen der Probe 18 führen. Wird das eingestellte Regelkraftniveau entsprechend in dieser Richtung überschritten, weitet sich der Spalt infolge der kraftgesteuerten Regelung mittels des Aktors 11.

Es existieren Ansätze, um aus dem etwaigen Absinken der Platte 12 und/oder dem kraftgeregelten Nachführen auf die Volumenabnahme der Materialprobe 18 zu schließen. Wie nachstehend noch aufgezeigt, sind aber keine hochgenauen Messungen des Probenvolumens insbesondere während eines anfänglichen Erstarrens bzw. einer anfänglichen Schrumpfung möglich.

So wurde erfindungsgemäß erkannt, dass insbesondere anfängliche Erstarrung über Kraftmessungen nicht hinreichend genau oder auch gar nicht erfassbar sind. Auch die Annahme einer wölbungsfreien Referenz-Probengrenze 20 führt zu einer unzutreffenden Berechnung des Probenvolumens, insbesondere da Letztere spätestens mit fortschreitender Erstarrung deutliche Wölbungen aufweisen kann. Bei existierenden Ansätzen besteht außerdem keine Kenntnis des exakten, bestehenden Ausgangsvolumens. Dies wird mit der offenbarten Lösung ebenfalls gelöst.

In Fig. 1 ist beispielhaft und erneut mit nicht repräsentativen Größenverhältnisse eine anfängliche konvex nach außen gewölbte Probengrenze 22 gezeigt (durchgezogene Linie). Diese steht über die gestrichelt dargestellte Referenz-Probengrenze 20 radial hervor.

In Fig. 2 ist ein zeitlich später liegender Zustand gezeigt, bei dem die Probe 18 bereits begonnen hat zu erstarren und folglich eine Volumenabnahme aufweist. Die äußere Probengrenze 22 ist nun konkav nach innen gewölbt und gegenüber der Referenz-Probengrenze 20 radial eingefallen.

Die Fläche zwischen den tatsächlichen Probengrenzen 22 aus Fig. 1 und 2 und der Referenz-Probengrenze 20 stellt einen von der angenommenen Referenz-Erstreckung der Materialprobe 18 abweichenden Flächenteil 23 und allgemein eine Fehlergröße dar. Wenn man diesen Flächenanteil 23 entlang des gesamten Probenumfangs aufaddiert, erhält man einen Volumenfehler, um den das Probenvolumen bei Annahme der Referenz-Probengrenze 20 zu groß oder zu klein berechnet wird.

Die gezeigte Ausführungsform berücksichtig dies in der Weise, als dass sie die tatsächliche Probengrenze 22 (also die im Spalt 16 freiliegende und diese überbrückende Probenoberfläche) sensorisch erfasst.

Hierfür weist die Vorrichtung 10 eine Messeinrichtung 24 auf, deren Erfassungsbereich, wie durch einen Strahlungskegel 26 angedeutet, auf den Spalt 16 gerichtet ist. Die Messeinrichtung 24 ist ein berührungsloser Abstandssensor und im gezeigten Fall ein Laserliniensensor. Eine auf den Spalt projizierte Laserlinie 28 ist entlang der Bewegungsachse B ausgerichtet. Sie überbrückt den Spalt 16 und ist quer hierzu ausgerichtet. Entlang der Laserlinie 28 können in bekannter Weise ortsaufgelöste Abstandswerte zwischen einem jeweiligen Auftreffort der Laserlinie 28 auf der vermessenen Oberfläche und der Messeinrichtung 24 bestimmt werden.

Lediglich aus Darstellungsgründen ist in Fig. 1 und 2 die Laserlinie 28 beabstandet von der Außenfläche der Platten 12 und der Probe 18 (insbesondere der Probengrenze 22) dargestellt. Tatsächlich liegt die Laserlinie 28 auf diesen Außen- bzw. Oberflächen. Nicht gesondert gezeigt ist die optionale Variante, bei der die Messeinrichtung 24 den Spalt 16 zumindest abschnittsweise abfahren kann, z.B. indem sie um die Bewegungsachse B rotiert. Der Bewegungsbereich der Messeinrichtung 18 umfasst bei dieser optionalen Rotation bevorzugt wenigstens 90° oder mehr, z.B. bis zu 270°. Sofern baulich möglich, kann auch ein vollständiger Umlauf um 360° erfolgen.

In Fig. 1 sind beispielhafte Auftrefforte, für die Abstandswerte bestimmbar sind, mit einem Kreuz markiert. Die Messeinrichtung 24 verfügt über Kalibrierinformationen, die z.B. bei einem sensorischen Erfassen der Platten 12 mit leerem Spalt 16 gewonnen wurden. Hierdurch können lokal gemessene Abstandsmesswerte sowie dazugehörige Bereich der Laserlinie 28 den Platten 12 zugeordnet und können hiervon abweichende Abstandsmesswerte der Probe 18 zugeordnet werden. Anders ausgedrückt kann anhand der Kalibrierinformationen differenziert werden, ob ein Abstandsmesswert den Platten 12 zuzuordnen und daher für die Probenvolumenbestimmung nicht relevant ist oder ob er der Probe 18 zuzuordnen ist. Insbesondere können die Übergansorte 30 zwischen den Platten 12 und der Probe 18 z.B. als Orte einer schwellenwertüberschreitenden Änderung der Abstandswerte erkannt werden. Dies ermöglicht es auch, zusätzlich oder alternativ zu herkömmlichen Spalthöhenmessungen die Spalthöhe H mit der Messeinrichtung 24 als Abstand zwischen den Auftrefforten 30 zu bestimmen.

Auf diese Weise ist die tatsächliche Probengrenze 22 und insbesondere deren radialer Verlauf messbar. Um das Probenvolumen zu berechnen, kann darauf basierend zum Beispiel ein durchschnittlicher Radius der Probe 18 bestimmt werden. Vorzugsweise werden aber die vorstehend erläuterten Flächenanteile 23 zwischen der Referenz-Probengrenze 20 und der tatsächlichen Probengrenze 22 bestimmt. Während die Abstandswerte zunächst erhaltene oder auch initiale Messinformationen darstellen, können diese Flächenanteile 23 resultierende oder auch finale Messinformationen zur Probenvolumenberechnung sein, die mittels der Messeinrichtung 24 erfasst werden. Die Flächenanteile können zum Beispiel mittels einer nicht gesondert dargestellten Steuereinrichtung der Vorrichtung 10 und insbesondere der Messeinrichtung 24 berechnet werden.

Um das Probenvolumen zu bestimmen, kann zunächst mittels des angenommenen Radius R und der ermittelten Spalthöhe H ein Ausgangsvolumenwert berechnet werden. Von diesem kann der in der vorstehenden erläuterten Weise von den Flächenanteilen 23 abhängige Volumenfehlerbetrag abgezogen oder aufaddiert werden, je nachdem, ob die Probengrenze 22 konkav oder konvex gewölbt ist. Letzteres kann aus dem Verlauf der Abstandsmesswerte entlang der Laserlinie 28 geschlossen werden. Dies erfasste Probengrenzen und/oder der Verlauf der Abstandswerte kann einem erfassten (Oberflächen-)Profil der Probe oder auch des sogenannten Meniskus entsprechen. Insbesondere handelt es sich hierbei um ein Beispiel einer erfindungsgemäß bestimmten Forminformation der vorstehend erläuterten Art.

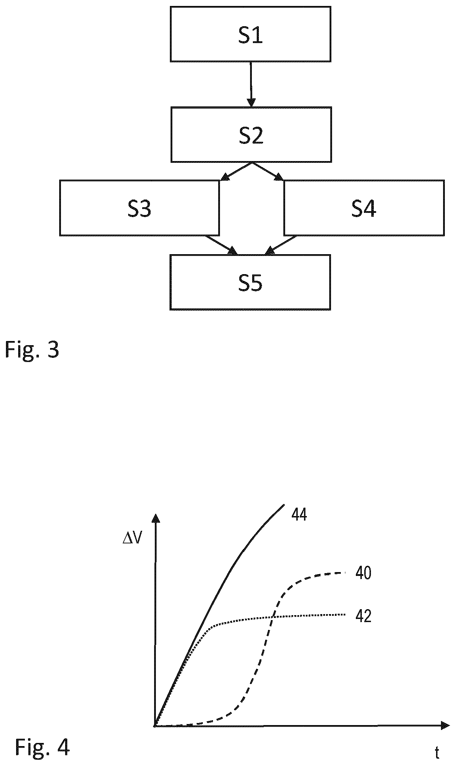

In Fig. 3 ist ein Ablaufschema eines mit der Vorrichtung 10 aus den Figuren 1 und 2 ausführbaren Verfahrens gezeigt. Im Schritt S1 wird die Materialprobe 18 zwischen den Platten 12 eingebracht. Im Schritt S2 wird eine gewünschte Spalthöhe H mittels des Aktors 11 und bevorzugt kraftgeregelt eingestellt, auch während die Probe 18 beginnt auszuhärten. Dies ermöglicht es im wiederholt ausgeführten Schritt S3 mittels herkömmlicher Ansätze das Probenvolumen auf Basis der aktorischen Plattennachführung zu berechnen. Im gleichzeitig und ebenfalls wiederholt ausgeführtem Schritt S4 wird das Probenvolumen fortlaufend anhand der mit der Messeinrichtung 24 gewonnenen Messinformationen berechnet. Die jeweils ermittelten Probenvolumenmesswerte V werden im optionalen Schritt S5 zusammengeführt, wodurch die in Fig. 4 gezeigten Messkurven 40-44 erhalten werden.

Im Detail zeigt Figur 4 den zeitlichen Verlauf der in Schritt S3 in herkömmlicher Weise ermittelten Probenvolumenmesswerte V als prozentuale Volumenabnahme ΔV, die infolge des Schrumpfes mit der Zeit zunimmt, (gestrichelte Kurve 40) und der in Schritt S4 mittels der Messeinrichtung 24 ermittelten Probenvolumenmesswerte V in Form der prozentualen Volumenabnahme ΔV (gepunktete Kurve 42). Die Volumenabnahme ΔV ist bevorzugt als prozentuale Abnahme (oder auch prozentualer Schrumpf) gegenüber einem Ausgangsvolumen angegeben. Prinzipiell können aber auch absolute Volumenwerte als Probenvolumenmesswerte V bestimmt werden. Auch Volumenzunahmen sind analog zu Figur 4 erfassbar und abbildbar, wobei ΔV dann z.B. einer Volumenzunahmen entsprechen kann.

Man erkennt, dass bei der Kurve 42 deutlich früher Volumenänderungen erfassbar sind, dafür aber mit zunehmender Erstarrungsdauer ein Plateau erreicht wird. Hingegen zeigt die Kurve 40 erst bei zunehmender Erstarrungsdauer, dafür aber auch über das Plateau der Kurve 42 hinaus messbare Volumenänderungen. Es verdeutlicht sich also eine zunächst primär radiale Schrumpfung, die mittels der Messeinrichtung 24, nicht aber mit herkömmlichen Rheometern erfassbar ist, gefolgt von einer primär axialen Schrumpfung, die analog zu herkömmlichen Rheometern im Rahmen einer kraftgeregelten Plattennachführung erfassbar ist.

Gezeigt ist auch eine Summenkurve 44, die durch Addieren der Kurven 40, 42 gebildet wird, und bei der sich die anfänglich präzisen Messungen gemäß der Kurve 40 und die zu späteren Zeitpunkten präzisen Messungen gemäß der Kurve 42 aussagekräftig ergänzen. Allgemein kann die hier offenbarte Lösung demnach vorsehen, einen Gesamt-Probenvolumenmesswert durch Addieren der mittels herkömmlicher und mittels berührungsloser Ansätze bestimmten Probenvolumenmesswerte zu bestimmen.

Nicht gesondert gezeigt im Ablauf aus Fig. 3, aber dennoch vorgesehen, ist das bevorzugt mehrfach aufeinanderfolgend oder auch kontinuierlich ausgeführte Ermitteln wenigstens eines rheologischen Materialkennwerts mit dem Rheometer 10. Somit liegen nach Durchführen der Untersuchung und im Rahmen nur eines Messvorgangs mit ein und derselben Materialprobe 18 sowohl Aussagen zum Härtungsschrumpf als auch zu dem rheologischen Materialkennwert vor. Diese Größen können simultan im Rahmen nur eines Messablaufs zuverlässig bestimmt werden.

Ebenso nicht gesondert gezeigt, aber dennoch möglich, ist das Anlegen einer definierten Normalkraft oder auch eines Normalkraftverlaufs zum Simulieren einer definierten Steifigkeitsumgebung gemäß jeglicher hierin offenbarter Variante. Dann kann auf eine Überwachung und Regelung der Spalthöhe H in Schritt S2 verzichtet werden und der Fokus auf dem Erzeugen des gewünschten Normalkraftverlaufes liegen. Stattdessen können zum Beispiel als alternative Schritte S3 und S4 Sollwerte für eine aktorische Normalkraft (Schritt S3) in Abhängigkeit des erfindungsgemäß ermittelten Volumens der Materialprobe 18 (ermittelt in Schritt S4) vorgegeben werden. Auch eine Vorgabe der aktorischen Normalkraft in Abhängigkeit des Spalthöhe H ist zusätzlich oder alternativ aber möglich.

Mit der gezeigten Vorrichtung 10 ist es in an sich bekannter Weise auch möglich, als Untersuchungsbedingungen definierte Normalkräfte auf die Materialprobe 18 aufzubringen und/oder per Regelung aufrechtzuerhalten, gleichzeitig aber sowohl rheologische Materialkennwerte als auch das Schrumpfverhalten zu bestimmen.

## Patentansprüche

1. Verfahren zur Untersuchung einer Materialprobe (18), mit:
- Anordnen der Materialprobe (18) in einem Spalt (16) zwischen zwei Flächen (14), wobei die Flächen (14) relativ zueinander entlang einer Bewegungsachse (B) bewegbar sind, und gemäß wenigstens einem weiteren räumlichen Freiheitsgrad relativ zueinander beweglich sind, um wenigstens einen Materialkennwert zu ermitteln;
wobei das Verfahren **gekennzeichnet ist durch**:
- berührungsloses Erfassen von zumindest einem Teilbereich von einer den Spalt (16) überbrückenden Probenoberfläche (22) mit einer berührungslosen Messeinrichtung (24); und
- Ermitteln:
a) wenigstens einer Forminformation betreffend die den Spalt überbrückenden Probenoberfläche (22) auf Basis von **durch** das berührungslose Erfassen gewonnenen Messinformationen, wobei die Messinformationen wenigstens einen Abstandsmesswert und/oder einen von einer vordefinierten Referenz-Probengrenze (20) abweichenden Flächenanteil (23) der Materialprobe (18) umfassen; und/oder
b) wenigstens eines Probenvolumenmesswerts (V) auf Basis von durch das berührungslose Erfassen gewonnenen Messinformationen.

2. Verfahren nach Anspruch 1 mit Variante b),
**gekennzeichnet durch** aufeinanderfolgendes Erfassen von Probenvolumenmesswerten (V) während sich ein Volumen der Materialprobe (18) ändert.

3. Verfahren nach Anspruch 1 oder 2,
**gekennzeichnet durch** aufeinanderfolgendes Erfassen von Werten des Materialkennwerts während sich ein Volumen der Materialprobe (18) ändert.

4. Verfahren nach Anspruch 2 und 3,
wobei die aufeinanderfolgend erfassten Probenvolumenmesswerte (V) und die Werte des Materialkennwerts sich auf dieselben Zeitpunkte beziehen.

5. Verfahren nach einem der vorangehenden Ansprüche,
**gekennzeichnet durch** Aufbringen einer Normalkraft auf die Materialprobe (18).

6. Verfahren nach einem der vorangehenden Ansprüche mit Variante b) von Anspruch 1,
**gekennzeichnet durch** Erfassen einer Spalthöhe (H) und **durch** Ermitteln des Probenvolumenmesswertes (V) unter Berücksichtigung der Spalthöhe (H);
und/oder Verwenden der berührungslos erfassten Messinformationen im Rahmen einer Steuerung oder Regelung des Spalthöhe (H).

7. Verfahren nach einem der vorangehenden Ansprüche,
**gekennzeichnet durch** Bereitstellen wenigstens einer Kalibrierinformation, die eine Grenze wenigstens einer der Flächen (14) in einer Richtung quer zur Bewegungsachse beschreibt, und Ermitteln der Messinformationen unter Berücksichtigung der Kalibierinformation.

8. Verfahren nach einem der vorangehenden Ansprüche mit Variante b) von Anspruch 1,
**gekennzeichnet durch** Bereitstellen wenigstens einer Kalibrierinformation, die eine Grenze wenigstens einer der Flächen (14) in einer Richtung quer zur Bewegungsachse beschreibt, und Ermitteln des Probenvolumenmesswertes (V) unter Berücksichtigung der Kalibierinformation.

9. Verfahren nach einem der vorangehenden Ansprüche mit Variante b) von Anspruch 1,
**gekennzeichnet durch** Ermitteln des Materialkennwerts und **durch** Ermitteln der Gültigkeit des Materialkennwerts auf Basis des Probenvolumenmesswertes (V).

10. Verfahren nach einem der vorangehenden Ansprüche mit Variante a) von Anspruch 1,
**gekennzeichnet durch** Überwachung und/oder Auswertung des Zustands der Materialprobe (18) anhand der Forminformation.

11. Vorrichtung (10), insbesondere Rheometer, zur Untersuchung einer Materialprobe (18), wobei die Vorrichtung (10) umfasst:
zwei Flächen (14), die einen Spalt (16) zur Aufnahme der Materialprobe (18) begrenzen, die relativ zueinander entlang einer Bewegungsachse (B) bewegbar sind, und die gemäß wenigstens einem weiteren räumlichen Freiheitsgrad relativ zueinander beweglich sind, um einen Materialkennwert zu ermitteln;
wobei die Vorrichtung (10) **gekennzeichnet ist durch**:
eine Messeinrichtung (24), die dazu eingerichtet ist, zumindest einen Teilbereich von einer den Spalt (16) überbrückenden Probenoberfläche (22) berührungslos zu erfassen;
wobei die Vorrichtung (10) dazu eingerichtet ist,
a) wenigstens eine Forminformation betreffend die den Spalt überbrückenden Probenoberfläche (22) auf Basis von **durch** die berührungslose Erfassung gewonnenen Messinformationen zu ermitteln, wobei die Messinformationen wenigstens einen Abstandsmesswert und/oder einen von einer vordefinierten Referenz-Probengrenze (20) abweichenden Flächenanteil (23) der Materialprobe (18) umfassen ; und/oder
b) wenigstens einen Probenvolumenmesswert (V) auf Basis von **durch** die berührungslose Erfassung gewonnenen Messinformationen zu ermitteln.

## Claims

1. A method for analysing a material sample (18), comprising:
- positioning the material sample (18) in a gap (16) between two surfaces (14), the surfaces (14) being movable relative to one another along an axis of movement (B) and being movable relative to one another in accordance with at least one further spatial degree of freedom, in order to determine at least one material parameter;
the method being **characterised by**:
- a non-contact acquisition of at least a partial area of a sample surface (22) spanning the gap (16) using a non-contact measuring device (24); and
- determining
a) at least shape information relating to the sample surface (22) spanning the gap, based on measurement data acquired by noncontact detection, the measurement data comprising at least one distance measurement and/or an areal share (23) of the material sample (18) that deviates from a predefined reference sample boundary (20); and/or
b) at least one sample volume measurement value (V) based on measurement data acquired through noncontact detection.

2. The method according to claim 1 with variant b), **characterised by** the successive acquisition of sample volume measurements (V) as the volume of the material sample (18) changes.

3. The method according to claim 1 or 2,
**characterised by** successively acquiring values of the material parameter as the volume of the material sample (18) changes.

4. The method according to claim 2 and 3,
the sequentially recorded sample volume measurements (V) and the material parameter values referring to the same points in time.

5. The method according to any one of the preceding claims, **characterised by** applying a normal force to the material sample (18).

6. The method according to any one of the preceding claims, comprising variant b) of claim 1,
**characterised by** acquiring a gap height (H) and determining the sample volume measurement (V) taking the gap height (H) into account;
and/or using the noncontact measurement data acquired as part of a control or regulation system for the gap height (H).

7. The method according to any one of the preceding claims,
**characterised by** providing at least one piece of calibration information that describes a boundary of at least one of the surfaces (14) in a direction transverse to the axis of movement, and determining the measurement data while taking the calibration information into account.

8. The method according to any one of the preceding claims, comprising variant b) of claim 1,
**characterised by** providing at least one piece of calibration information that describes a boundary of at least one of the surfaces (14) in a direction transverse to the axis of movement, and determining the sample volume measurement (V) taking the calibration information into account.

9. The method according to any one of the preceding claims, comprising variant b) of claim 1,
**characterised by** determining the material parameter and by determining the validity of the material parameter based on the sample volume measurement (V).

10. The method according to any one of the preceding claims, comprising variant a) of claim 1,
**characterised by** monitoring and/or evaluating the condition of the material sample (18) based on the shape information.

11. A device (10), in particular a rheometer, for analyzing a material sample (18), the device (10) comprising:
two surfaces (14) that define a gap (16) for receiving the material sample (18), which are movable relative to each other along an axis of movement (B), and which are movable relative to each other according to at least one additional spatial degree of freedom in order to determine a material parameter;
the device (10) being **characterised by**:
a measuring device (24) configured to acquire by noncontact at least a portion of a sample surface (22) spanning the gap (16);
the device (10) being configured to
a) determine at least one shape information relating to the sample surface (22) spanning the gap, based on measurement data acquired through noncontact detection, the measurement data comprising at least one distance measurement and/or an areal ratio (23) of the material sample (18) that deviates from a predefined reference sample boundary (20); and/or
b) to determine at least one sample volume measurement (V) based on measurement data acquired through noncontact detection.

## Revendications

1. Procédé d'examen d'un échantillon de matériau (18), comprenant l'étape consistant à:
- agencer l'échantillon de matériau (18) dans un interstice (16) situé entre deux surfaces (14), dans lequel les surfaces (14) peuvent être déplacées l'une par rapport à l'autre le long d'un axe de déplacement (B) et sont mobiles l'une par rapport à l'autre selon au moins un autre degré de liberté spatial, afin de déterminer au moins une valeur caractéristique de matériau;
dans lequel le procédé est **caractérisé par** les étapes consistant à:
- détecter sans contact, à l'aide d'un dispositif de mesure sans contact (24), au moins une sous-région d'une surface d'échantillon (22) comblant l'interstice (16); et
- déterminer:
a) au moins une information de forme relative à la surface d'échantillon (22) comblant l'interstice, en se basant sur des informations de mesure obtenues par détection sans contact, dans lequel les informations de mesure comprennent au moins une valeur de mesure de distance et/ou une part de surface (23) de l'échantillon de matériau (18) s'écartant d'une limite d'échantillon de référence (20) prédéfinie; et/ou
b) au moins une valeur de mesure de volume d'échantillon (V) en se basant sur des informations de mesure obtenues par détection sans contact.

2. Procédé selon la revendication 1 avec variante b), **caractérisé par** l'étape consistant à enregistrer de manière successive des valeurs de mesure de volume d'échantillon (V) tandis qu'un volume de l'échantillon de matériau (18) change.

3. Procédé selon la revendication 1 ou 2,
**caractérisé par** l'étape consistant à enregistrer de manière successive des valeurs de la valeur caractéristique de matériau tandis qu'un volume de l'échantillon de matériau (18) change.

4. Procédé selon la revendication 2 ou 3,
dans lequel les valeurs de mesure de volume d'échantillon (V) enregistrées de manière successive et les valeurs de la valeur caractéristique de matériau se rapportent aux mêmes points temporels.

5. Procédé selon l'une quelconque des revendications précédentes, **caractérisé par** l'application d'une force normale à l'échantillon de matériau (18).

6. Procédé selon l'une quelconque des revendications précédentes avec la variante b) de la revendication 1,
**caractérisé par** les étapes consistant à enregistrer une hauteur d'interstice (H) et à déterminer la valeur de mesure de volume d'échantillon (V) en tenant compte de la hauteur d'interstice (H);
et/ou à utiliser les informations de mesure enregistrées sans contact dans le cadre d'une commande ou d'une régulation de la hauteur d'interstice (H).

7. Procédé selon l'une quelconque des revendications précédentes,
**caractérisé par** les étapes consistant à fournir au moins une information d'étalonnage qui décrit une limite d'au moins une des surfaces (14) dans une direction transversale à l'axe de déplacement, et à déterminer des informations de mesure en tenant compte des informations d'étalonnage.

8. Procédé selon l'une quelconque des revendications précédentes avec la variante b) de la revendication 1,
**caractérisé par** les étapes consistant à fournir au moins une information d'étalonnage qui décrit une limite d'au moins une des surfaces (14) dans une direction transversale à l'axe de déplacement, et à déterminer de la valeur de mesure de volume d'échantillon (V) en tenant compte des informations d'étalonnage.

9. Procédé selon l'une quelconque des revendications précédentes avec la variante b) de la revendication 1,
**caractérisé par** les étapes consistant à déterminer la valeur caractéristique de matériau et à déterminer la validité de la valeur caractéristique de matériau en se basant sur la valeur de mesure de volume d'échantillon (V).

10. Procédé selon l'une quelconque des revendications précédentes avec la variante a) de la revendication 1,
**caractérisé par** les étapes consistant à surveiller et/ou à évaluer l'état de l'échantillon de matériau (18) à l'aide des informations de forme.

11. Dispositif (10), en particulier rhéomètre, permettant d'examiner un échantillon de matériau (18), dans lequel le dispositif (10) comprend:
deux surfaces (14) qui délimitent un interstice (16) permettant d'accueillir l'échantillon de matériau (18) et qui peuvent être déplacées l'une par rapport à l'autre le long d'un axe de déplacement (B), et qui sont mobiles l'une par rapport à l'autre selon au moins un autre degré de liberté spatial afin de déterminer une valeur caractéristique de matériau;
dans lequel le dispositif (10) est **caractérisé par**:
un dispositif de mesure (24) conçu pour détecter sans contact au moins une sous-région d'une surface d'échantillon (22) comblant l'interstice (16) sans contact;
dans lequel le dispositif (10) est conçu pour
a) déterminer au moins une information de forme relative à la surface d'échantillon (22) comblant l'interstice, en se basant sur des informations de mesure obtenues par détection sans contact, dans lequel les informations de mesure comprennent au moins une valeur de mesure de distance et/ou une part de surface (23) de l'échantillon de matériau (18) s'écartant d'une limite d'échantillon de référence (20) prédéfinie; et/ou
b) déterminer au moins une valeur de mesure de volume d'échantillon (V) en se basant sur des informations de mesure obtenues par détection sans contact.
